(19) Europäisches Patentamt / European Patent Office / Office européen des brevets

(11) **EP 1 972 769 B1**

(12) **EUROPEAN PATENT SPECIFICATION**

(45) Date of publication and mention
of the grant of the patent:
**26.04.2017 Bulletin 2017/17**

(51) Int Cl.:
*F02D 41/22* (2006.01)     *F02D 41/24* (2006.01)
*F02D 41/04* (2006.01)     *F02D 41/14* (2006.01)
*F02D 41/38* (2006.01)

(21) Application number: **08250283.2**

(22) Date of filing: **23.01.2008**

(54) **Internal combustion engine fuel delivery system diagnosis device and method**

Diagnosevorrichtung und -verfahren für ein Kraftstoffzumesssystem einer Brennkraftmaschine

Dispositif et procédé de diagnostic d'un système de distribution de carburant dans un moteur à combustion interne

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **15.03.2007 GB 0705024**

(43) Date of publication of application:
**24.09.2008 Bulletin 2008/39**

(73) Proprietor: **Delphi International Operations
Luxembourg S.à r.l.
4940 Bascharage (LU)**

(72) Inventor: **Turfkruyer, Katie
London W5 3JD (GB)**

(74) Representative: **Delphi France SAS
Patent Department
22, avenue des Nations
CS 65059 Villepinte
95972 Roissy CDG Cedex (FR)**

(56) References cited:
**EP-A- 0 424 630         EP-A- 0 781 912
EP-A- 1 972 780         DE-A1- 3 615 547
DE-A1- 19 626 690     US-A- 5 050 554**

## Description

Field of the Invention

This invention relates to a vehicle diagnosis device and method. In particular, the present invention relates to a diagnosis unit for diagnosing faults in a fuel delivery system of a vehicle that cause variations in exhaust emission levels. The invention extends to a method of diagnosing faults in the fuel delivery system and to a method of calibrating such a device/method.

Background of the Invention

With the introduction of stricter emission regulations (particularly in the USA), on-board diagnostic (OBD) requirements have emerged aimed at indicating faults causing excessive vehicle emission levels (emission threshold based diagnosis). These requirements include identification of the source of the fault for a quick and guided repair of the problem.

One of the systems requiring fault indication is the vehicle's fuel delivery system. Regulations require diagnosis of fuel injection quantity, pressure and timing fault types which may cause either an increase/decrease in the quality/quantity of combustion and thus a variation in the emission levels. It is noted that any fault diagnosis system/method needs to work reliably across the full range of operation of a vehicle's engine (speed and load) and be robust to variations in ambient conditions, driving conditions and style and fuel quality.

Known diagnostic systems and methods have previously only been required to detect complete combustion misfire. In a compression ignition engine application (e.g. diesel fuel engine system) a misfire can be caused by either a total failure to inject fuel or a loss of cylinder pressure. It is noted however that in most applications, changes in the fuel delivery, less severe than that which would cause misfire, would also cause vehicle emissions to exceed stipulated thresholds and may not be detected via the known detection systems.

Variations in the fuel injection quantity, cylinder pressure and injection timing (of which misfire is an extreme case) cause a change in the rotational speed of the engine crankshaft. Current crank (shaft) speed misfire diagnostic methods exploit this by comparing the average engine speed over one cylinder to the next. These methods vary in the number of crank teeth over which the average engine speed is calculated, but the principle remains the same in that the diagnosis is made by detecting when the misfiring of a cylinder causes a deceleration in its rotational speed relative to the adjacent cylinder(s) (Note: adjacent in this context means adjacent in the firing order and not necessarily physically adjacent).

If every possible engine failure mode that an engine could potentially experience caused a deceleration in the engine's rotational speed, then it might conceivably be possible to further fine tune strategies to detect less severe faults (compared to a misfire).

However, there are failure modes that cause an increase in the engine's rotational speed, such as a fuel injector needle being stuck open.

With current diagnostic methods based on adjacent cylinder crank speed comparisons, a needle stuck open condition on a given cylinder could actually be misdiagnosed as a misfire on an adjacent cylinder (since there would be a relative deceleration compared to the faulty cylinder and it would not be possible to distinguish whether (i) a first cylinder was normal and a second cylinder was experiencing a needle open condition, or (ii) a first cylinder was experiencing a misfire and a second cylinder was normal).

A drawback therefore of known diagnostic methods is that there is no reliable way of identifying if an engine is experiencing misfire or needle stuck open type failures on one or more cylinders.

An alternative diagnostic method would be to model/predict the rotational variations in the behaviour of the engine that are caused by combustion and to compare measured variations to this calculated/mapped value and from this diagnose if there is a fault. The problem with this method lies in the number of factors needed for consideration in order to make a suitably sensitive and robust model. For example, Fuel Quality is one factor that can vary the rotational energy derived from a combustion event and this can vary with the engine's usage but there is no current way of measuring/detecting such a variation on the ECU.

Document DE 196 26 690 A1 has been considered to disclose a diagnostic unit for determining the operational status of a fuel delivery system of an engine, the engine comprising a plurality of cylinders, each one of the cylinders comprising a combustion chamber into which fuel is injected by an associated fuel injector and within which, in use, combustion events repeatedly occur to define a combustion cycle of the cylinder between successive combustion events, the diagnostic unit comprising inputs for receiving data related to engine rotation, processing means arranged to determine, from the data received at the inputs, a first engine rotation parameter for a cylinder under test at a first point within the combustion cycle of the cylinder and to determine a second engine rotation parameter for the cylinder under test at a second, different point within the combustion cycle of the cylinder, and compare the two engine rotation parameters for the test cylinder in order to identify the operational status of the fuel delivery system associated with the cylinder under test. DE 196 26 690 A1 achieves this by effectively determining engine speed change amounts which are compared to a mean values thereof.

It is therefore an object of the present invention to provide a diagnostic device/method that substantially overcomes or mitigates the problems of known "cylinder-to-cylinder" diagnostic methods and which allows reliable diagnosis of fault conditions within an engine system.

## Statements of Invention

According to a first aspect of the present invention, there is provided a diagnostic unit for determining the operational status of a fuel delivery system of an engine, the engine comprising a plurality of cylinders, each one of the cylinders comprising a combustion chamber into which fuel is injected by an associated fuel injector and within which, in use, combustion events repeatedly occur to define a combustion cycle of the cylinder between successive combustion events, the diagnostic unit comprising: inputs for receiving data related to engine rotation; processing means arranged: (i) to determine, from the data received at the inputs, a first engine rotation parameter for a cylinder under test at a first point within the combustion cycle of the cylinder and to determine a second engine rotation parameter for the cylinder under test at a second, different point within the combustion cycle of the cylinder; and (ii) to compare the two engine rotation parameters for the test cylinder in order to identify the operational status of the fuel delivery system associated with the cylinder under test wherein the processing means is arranged to derive a relative engine rotation parameter, the relative engine rotation parameter being the difference between the first and second engine rotation parameters, and to compare the relative engine rotation parameter to a predicted relative engine rotation parameter in order to determine the operational status of the cylinder under test and wherein predicted relative engine rotation parameters are stored in a function map as a function of engine speed and injected fuel quantity.

The present invention provides a diagnostic unit that analyses engine rotational motion within the combustion cycle of a single cylinder in order to determine the operational status of those parts of the fuel delivery system of the engine that are associated with the cylinder under test (e.g. the cylinders, associated fuel injectors, fuel pumps etc. of the engine). It is noted that references to "operational status" or "operational status of the cylinder" are taken to include the operational status of the cylinder, fuel injector, fuel pumps or any other part of the fuel delivery system associated with the cylinder under test and all instances of this phrase should be read accordingly.

An engine rotation parameter is measured at two different points within the combustion cycle of the cylinder and by analysing the difference between these two values a determination of the operational status of the cylinder can be made. For example, for a cylinder working within normal operational parameters, engine speed (being an example of an engine speed parameter) would be expected to increase from a minimum value at cylinder top dead centre position later in the combustion stroke. By contrast, for a misfiring cylinder the engine speed would decrease from the value at cylinder top dead centre later in the combustion stroke.

The processing means calculates the difference between the engine rotation parameters at the first and second positions, i.e. it calculates the relative engine speed parameter for the cylinder under test. This relative parameter value is then used to identify the operation status of the cylinder/injector under test. The relative engine rotation parameter determined above is compared to a predicted value. This predicted value is stored in a function map (as a function of engine speed and demanded quantity of fuel injected).

Conveniently, the processing means is arranged to determine the two engine rotation parameters later in the combustion stroke, i.e. after combustion occurs. This enables the unit to assess the effect of combustion on the operation of the engine.

Preferably, the first point corresponds to the cylinder's top dead centre position and the second point is later in the combustion cycle.

In order to improve the accuracy of the diagnostic unit, the unit can conveniently assess the engine parameters over a number of injections/combustion cycles.

The diagnostic unit may additionally comprise output means for outputting an indication of the operational status of the engine following the determination of the relative engine rotation parameter.

In the event that the processing means returns a negative value for the relative engine rotation parameter the output means may output a signal indicating a severe combustion fault, for example a misfire.

In the event that the processing means determines that the predicted relative engine rotation parameter is less than the measured value the output means may output an over-fuelling notification signal, e.g. a "needle stuck open" notification signal.

In the event that the processing means determines that the predicted relative engine rotation parameter is greater than the measured value the output means may output a "reduced combustion quantity/quality" notification signal, e.g. a misfire signal.

The diagnostic unit may conveniently also assess cylinder-to-cylinder engine speed variations in order to determine cylinders likely to be experiencing problems.

Conveniently, the diagnostic unit may comprise a correction means arranged to correct the predicted relative engine rotation parameters held in the function map. Preferably, the diagnostic unit may be arranged to determine periods when no faults are present within the fuel system (via a determination of cylinder-cylinder engine speed variations across all cylinders) and then to correct the value of the relative engine rotation parameter stored within the function map by comparing the map value with a measured value.

Conveniently, the correction of values stored in the function map may be achieved by means of a feedback loop with PID control plus a feed forward term from a function map.

Conveniently, the data relating to engine rotation that is input into the diagnostic unit comprises data relating to the rotation of a crank wheel within the engine. In such cases, the processing means may determine the speed of the crank wheel (which is related to the engine speed of the engine) at two different points in the combustion cycle of the cylinder under test.

It is noted that typical crank wheels comprise a number of regularly spaced teeth which are associated with each cylinder. Conveniently, therefore, the processing means may monitor the time taken for such teeth to move past a sensor and from this time information may derive a value for the speed of the crank wheel. Alternatively, the processing means may determine the operational status of the engine by determining and comparing the time taken for two different crank teeth to move past a crank tooth sensor (e.g. for an arrangement with 18 teeth per cylinder, the first engine rotation parameter may conveniently be determined at the cylinder's TDC position and the second engine rotation parameter may conveniently be determined at a later point in the combustion stroke, for example at tooth 18 [the last tooth associated with the cylinder]).

The invention extends to an engine control unit for a vehicle and a diagnostic system of a vehicle comprising a diagnostic unit according to the first aspect of the present invention, a crank wheel, the crank wheel comprising a group of regularly spaced crank teeth associated with each cylinder within the engine, and a crank tooth sensor for sensing movement of the crank teeth, the output of the crank tooth sensor being input to the diagnostic unit.

According to a second aspect of the present invention there is provided a method of determining the operational status of a fuel delivery system of an engine, the engine comprising a plurality of cylinders, each one of the cylinders comprising a combustion chamber into which fuel is injected by an associated fuel injector and within which, in use, combustion events repeatedly occur to define a combustion cycle of the cylinder between successive combustion events, the method comprising: receiving data related to engine rotation; determining, from the data received, a first engine rotation parameter for a cylinder under test at a first point within the combustion cycle of the cylinder; determining a second engine rotation parameter for the cylinder under test at a second, different point within the combustion cycle of the cylinder; and comparing the two engine rotation parameters for the test cylinder in order to identify the operational status of the fuel delivery system associated with the cylinder under test the method further comprising: deriving a relative engine rotation parameter, the relative engine rotation parameter being the difference between the first and second engine rotation parameters; and comparing the relative engine rotation parameter to a predicted relative engine rotation parameter in order to determine the operational status of the cylinder under test wherein predicted relative engine rotation parameters are stored in a function map as a function of engine speed and injected fuel quantity.

According to a third aspect of the present invention there is provided a carrier medium for carrying a computer readable code for controlling a processor, computer, controller or engine control unit to carry out the method of the second aspect of the invention.

It is noted that preferred features of the second and third aspects of the invention are the same as the preferred features of the first aspect of the invention.

Brief Description of the Drawings

In order that the invention may be more readily understood, reference will now be made, by way of example, to the accompanying drawings in which:

Figure 1 illustrates the typical disposition of pickup teeth on a flywheel of an engine;

Figure 2 illustrates the output of a sensor monitoring the rotation of the flywheel of Figure 1 and shows the time between successive crank teeth on the flywheel;

Figure 3 shows plots of crank tooth times and crank speeds for two injectors on the flywheel of Figure 1;

Figure 4 shows five different graphs of cylinder engine speed (relative to adjacent cylinders in the firing order) versus injector number with a number of repeated points at each condition;

Figure 5 shows accumulated cylinder-to-cylinder speed variations (expressed in microseconds) for a faulty cylinder summed over multiple injection events;

Figure 6 shows the differences between engine speeds for a given cylinder as a function of crank tooth (for two different injector conditions) in accordance with an embodiment of the present invention;

Figure 7 shows accumulated relative differences in engine speed between tooth 18 and tooth 13 of a cylinder under test summed over multiple injection events in accordance with an embodiment of the present invention;

Figure 8 shows a combined diagnostic method in accordance with a further embodiment of the present invention;

Figure 9 shows a control logic diagram relating to the embodiments of the present invention.

Detailed Description

In a compression-ignition internal combustion engine, such as a diesel engine, combustion takes place within one or more combustion chambers or cylinders, each chamber being defined partly by a reciprocating piston and partly by the walls of a cylinder bore formed in a cylinder head. The piston slides within the cylinder so that, when the engine is running, the volume of the combustion chamber cyclically increases and decreases. When the combustion chamber is at its minimum volume, the piston is said to be at 'top dead centre' (TDC), and when the combustion chamber is at its maximum volume, the piston is said to be at 'bottom dead centre' (BDC).

The piston is connected to a cranked portion of a crankshaft by way of a connecting rod and a flywheel (or crank wheel) is mounted on one end of the crankshaft. The reciprocating motion of the piston therefore corresponds to rotary motion of the crankshaft, and it is customary in the art to define the position of the piston according to the angle of the cranked portion of the crankshaft, with TDC corresponding to a crank angle of zero degrees. During a complete internal combustion cycle, comprising intake, compression, power and exhaust strokes of the piston, the crankshaft undergoes two whole revolutions, corresponding to a crank angle movement of 720°.

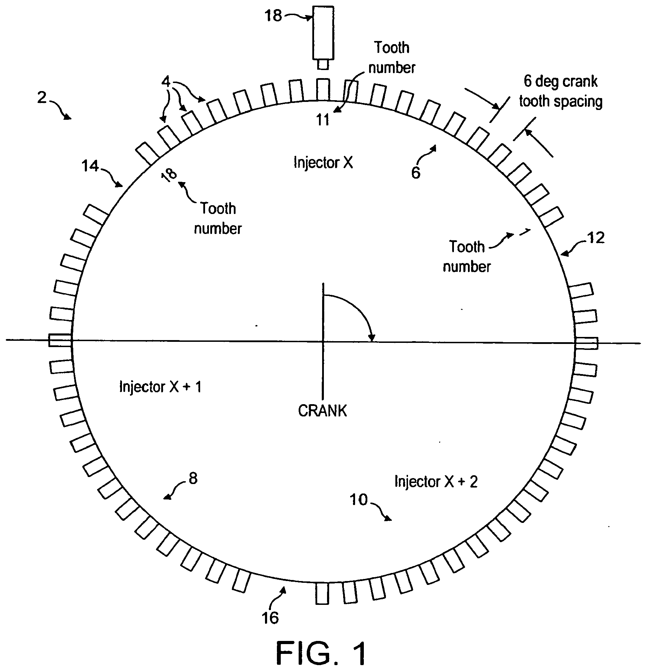

Figure 1 illustrates a typical flywheel 2. It can be seen that the flywheel comprises a number of teeth 4 on its outer periphery which are arranged into three groups (6, 8, 10). Each group (6, 8, 10) is associated with an injector (injector X, injector X+1 and injector X+2) and each group comprises 18 teeth which are regularly spaced at 6-degree intervals. The group of teeth for injector X are partially numbered (teeth 1, 11 and 18 are numbered).

Three regions (12, 14, 16) on the flywheel are not machined, ie have no teeth.

A sensor 18, for example, a variable reluctance sensor, is shown opposite tooth 11 in group 6. This sensor is used to detect motion of the crank teeth 4 and the decoded signal output from the sensor is used to provide position information which is used for engine speed measurement and fuel pulse scheduling. It is noted that any suitable sensor may be used to measure crank tooth motion, e.g. an optical based sensor may be used.

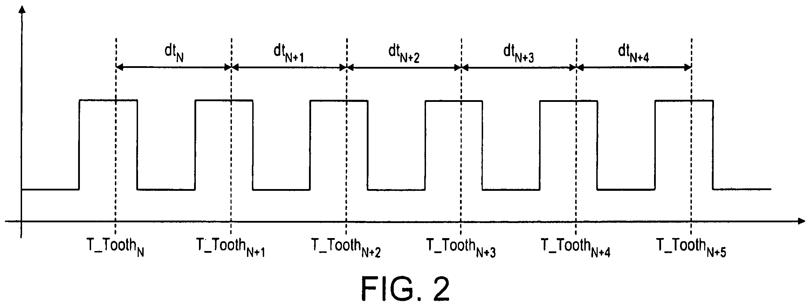

The crank tooth time is the time between successive crank teeth. This is illustrated in Figure 2 which shows the decoded signal output from the sensor of Figure 1. The time between tooth N and tooth N+1 is $dt_N$:

$$dt_N = T\_Tooth_{N+1} - T\_Tooth_N$$

where $T\_Tooth_N$ refers to the absolute time for tooth N.

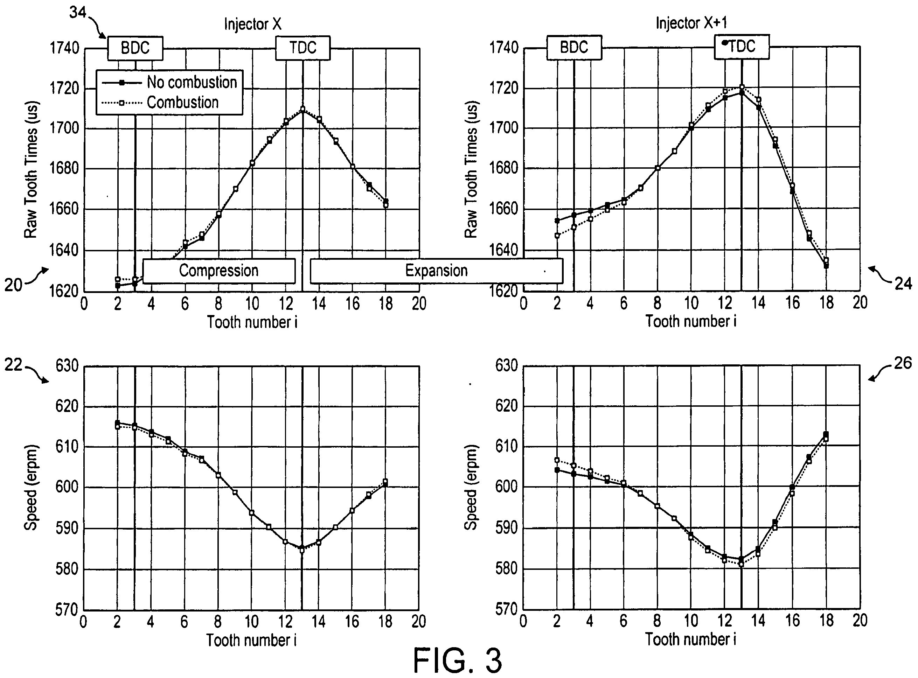

Figure 3 shows an example for crank tooth times and crank speeds for a test injector X and a subsequent injector X+1 in the firing order.

Figure 3 shows four separate graphs (20, 22, 24, 26). Graphs 20 and 22 relate to injector X and graphs 24 and 26 relate to injector X+1. The graphs show an example of the crank tooth times and crank tooth speeds for the two injectors for two different engine conditions - where there is combustion within the cylinder and where there is no combustion.

Graph 20 shows a plot of tooth times versus tooth number for injector X for the combustion and no combustion cases. The compression 28 and expansion 30 phases of the piston are indicated on the plot and the "top dead centre" 32 and "bottom dead centre" 34 positions of the piston are indicated. It can be seen that the flywheel slows down during the compression stroke and the crank teeth times increase. Conversely, as the flywheel enters the expansion stroke the crank wheel speeds up and the crank teeth times decrease.

A difference in the crank speed or tooth times can be seen at the end of the expansion stroke between the case where there is no combustion and the case where there is combustion occurring. It can be seen from the graphs that the crank wheel speeds up more when combustion is occurring.

As noted above, known monitoring/diagnosis methods tend to measure cylinder-to-cylinder variations when detecting fuel delivery system faults.

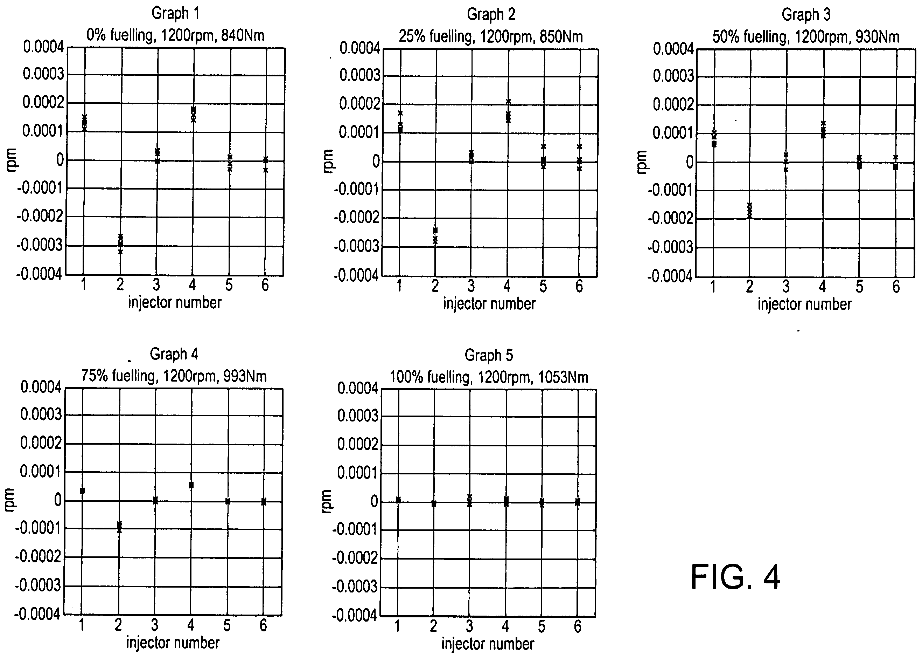

An example of one type of cylinder-to-cylinder comparison is shown in Figure 4.

Figure 4 shows differences in engine revolutions per minute for each cylinder in a six cylinder engine system. Five separate multi-shot graphs are shown, each of which depicts the effect of a different fuelling condition on cylinder 2. It is noted that the engine speed is calculated based on a comparison of the average speed between cylinder top-dead-centre (TDC) positions.

For example, in a typical engine the crank wheel may comprise 18 teeth per cylinder. Using the sensor 18 it is possible to measure the time taken to move from top dead centre on injector/cylinder X (which, in the 18 toothed example detailed above, corresponds to tooth 13) to top dead centre on injector/cylinder X+1. This measured time period (which will be in the order of microseconds) may then be converted to an engine revolutions per minute (rpm) value as shown in Figure 4.

Taking the top left hand graph (graph 1) as an example (0% fuelling at cylinder 2, 1200rpm, 840 Nm) it is noted that the engine rpm for cylinder 2 is 0.0003 rpm slower than for cylinder 1 - in other words the time taken to move from TDC (cylinder 2) to TDC (cylinder 3) is 0.0003 rpm less than the speed calculated from the time taken to move from TDC (cylinder 1) to TDC (cylinder 2).

The relative difference between cylinder 3 and cylinder 2 is shown as approximately 0 rpm (i.e. the time taken to go from TDC[cyl 2] to TDC[cyl3] is approximately equal to TDC[cyl3] to TDC[cyl4]). The reason that the rpm value for cylinder 3 is equal to that of cylinder 2 is because the engine is in recovery from the misfire at cylinder 2.

Graph 5, by contrast, depicts 100% fuelling at cylinder 2 and it can be seen that the relative differences in engine speed between the six cylinders is zero, indicating that each cylinder is functioning equally correctly.

It is noted that while the version of cylinder-to-cylinder measurement shown in Figure 4 is effectively an average cylinder speed across all 18 teeth, other methods of calculating an average speed are possible, e.g. a sub-set of the 18 teeth may be monitored or the speed for a particular tooth across each cylinder may be determined.

Although the cylinder-to-cylinder diagnosis method described above is sensitive to relative changes between cylinders it has a drawback in that it can be difficult, if not impossible, to distinguish between certain fault conditions (such as the misfire/needle stuck open problem described above).

It is noted that the engine fault mode depicted in Figure 4 is actually a mis-fire on cylinder 2. Whilst this is fairly clear in the fuelling condition depicted in graph 1, the situation is far less clear cut in the 50% or 75% fuelling examples (graphs 3 and 4 respectively). Taking graph 4 as an example, it would be very difficult to distinguish between a misfire on cylinder 2 and a needle stuck open on cylinder 4 using this cylinder-to-cylinder monitoring method.

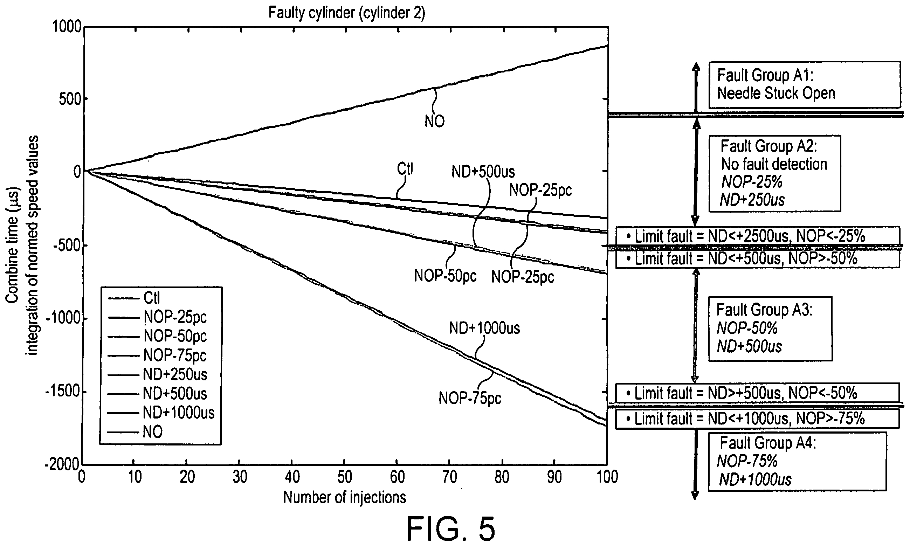

Figure 5 is essentially an extension of the cylinder-to-cylinder method described above but for a single cylinder only (i.e. for cylinder 2) for a range of fault types. Figure 5 has been derived by comparing the time to taken to reach TDC tooth for cylinders 2 and 3. The vertical axis of Figure 5 shows this time difference in microseconds and the graph shows the results of this time comparison for a number of injections (0 to 100 injections).

By way of further explanation, the bottommost line in Figure 5 relates to a fault condition where the injection pressure has been reduced by 75% on cylinder 2. At injection number = 100, the accumulative time difference between the two cylinders is approximately 1750 $\mu$s. Therefore, per injection, the TDC tooth on cylinder 3 is approximately 17.5 $\mu$s slower to pass the sensor than the TDC tooth on cylinder 2.

The following further points are noted with respect to Figure 5:

- the topmost line relates to the fault condition where the needle is stuck open ("NO" on Figure 5) and it is noted that the measured time difference is a positive value;
- For the faulty cylinder (cylinder 2), the NO fault shows an increased time difference measurement for the faulty cylinder (cylinder 2). However, for cylinder 3 there will be a corresponding decrease of the measured value with approximately the same amplitude.
- The misfire condition represented by the bottommost line (injection pressure reduced by approximately 75%) shows a negative time difference. As with the comment above, it is noted that cylinder 3 will show an increase in the time difference of approximately the same amplitude.

The monitoring methods described above in relation to Figures 4 and 5 equate to either known measurement/diagnosis methods or extensions thereof. It is important to note that whilst the cylinder-to-cylinder analysis depicted above shows a clear variation between various fault conditions it is very difficult to tell the fault conditions apart. Additionally, it is possible to mis-diagnose fault conditions between neighbouring cylinders due to the fact that, for example, a misfire on one cylinder will present itself in an almost identical manner to a needle stuck open fault on a neighbouring cylinder.

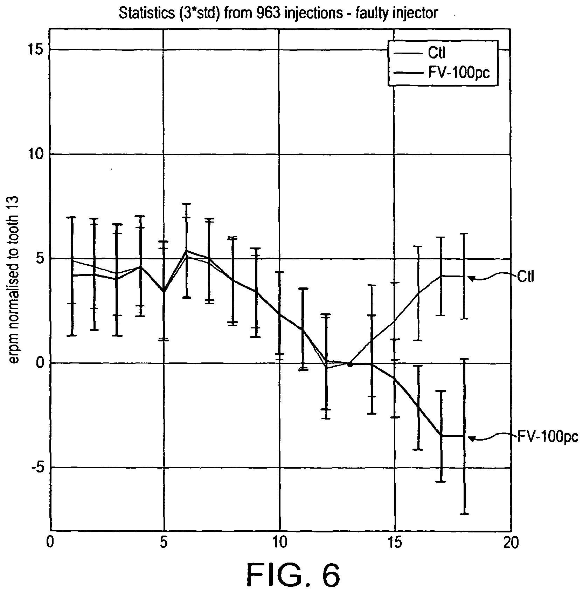

A monitoring and diagnosis method in accordance with an embodiment of the present invention is shown in Figures 6-9.

The present invention detects faults within the engine system by analysing engine speed for a given cylinder at two different points within the combustion cycle. As noted above the crank teeth associated with each injector are evenly spaced around the crank wheel and in the example given in Figure 1 above each tooth corresponds to 6 degrees of crank angle.

By measuring the time it takes a particular tooth to pass the sensor it is possible to determine engine speed as a function of crank tooth number. By measuring the engine speed for a given cylinder at two different points within a combustion cycle it is possible to derive information regarding the operational status of those parts of the fuel delivery system that are associated with the cylinder under analysis.

If the engine speed is detected towards the end of the combustion cycle and compared to an earlier (and slower) crank tooth it is possible to analyse combustion induced changes in the engine speed for the given cylinder.

In a preferred embodiment the engine speed is detected at the end of combustion (in the above example this is at tooth 18) and is compared to the engine speed at top dead centre (tooth 13). Top Dead Centre is conveniently chosen as the comparison point as the speed of the piston within the cylinder (and therefore the engine speed) should be at a minimum at TDC.

Figure 6 illustrates the differences between engine speeds for each tooth (1-18 inclusive) for a given cylinder and the engine speed at the TDC tooth (tooth 13). Two different traces are shown, one representing a healthy fuelling condition and the other a misfiring cylinder. Error bars are of $\pm$ 3 standard deviation.

It can be seen that the healthy (no faults) cylinder shows a relative increase in engine speed compared to TDC towards the end of the combustion cycle. The misfiring cylinder however shows a decrease in engine speed relative to TDC.

It can therefore be seen that that a healthy cylinder may be distinguished from a misfiring cylinder by analysing the relative engine speed (relative to the earlier, slower tooth 13) of crank tooth 18.

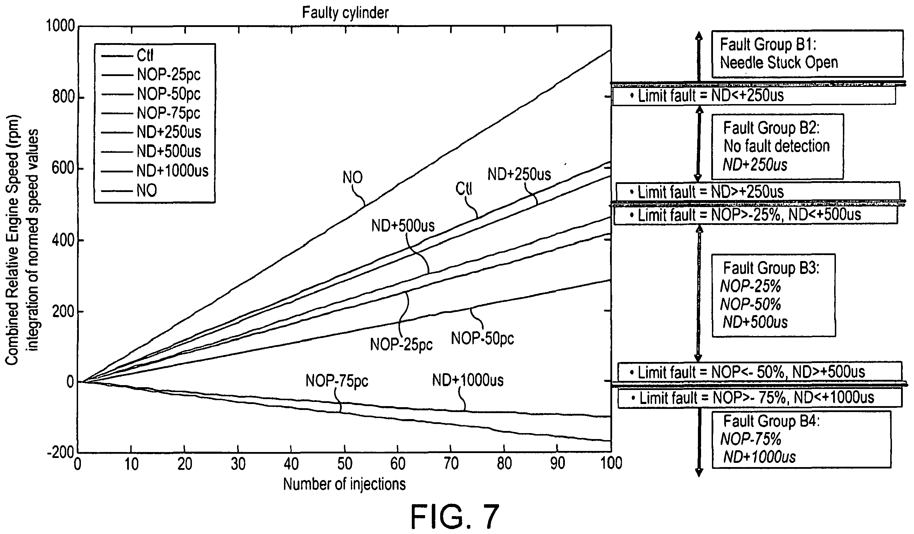

Figure 7 shows the relative accumulative difference between the engine speed at tooth 18 and tooth 13 summed over 100 engine cycles on one cylinder for a range of fault types.

Note: the engine conditions (engine speed and quantity of fuel injected) for the results shown in Figures 6 and 7 are not the same. However, if the conditions were the same then it is noted that the tooth 18 value (Δrpm=4) for the healthy trace in Figure 6 would, over 100 cycles, equate to a value of around 400 on the right hand vertical axis of Figure 7.

Returning to Figure 7, it can be seen the various fault conditions all produce distinct traces on the graph. It is therefore possible to distinguish between different fault conditions that may affect the cylinder.

Conveniently, the measured relative engine speed value measured in Figures 6 and 7 can be compared to an expected value to determine the operational status of the cylinder. A relative engine speed function map (as a function of engine speed and quantity of fuel injected) can be used to perform this comparison. It is noted that the four general fault conditions shown to the right of Figure 7 essentially equate to the mapped (expected) values for the rpm difference between teeth 13 and 18.

Relative to the control trace (healthy cylinder), the difference between a needle stuck open (NO) condition and the value from the function map will result in a positive value (Δrpm value for NO - Δrpm for control = +ve) whereas misfiring cylinders result in a negative value (Δrpm for misfire - Δrpm for control = -ve). The size of the +ve or -ve value calculated indicates the type of fault.

In summary, it is noted that on a given cylinder, as the actual fuel delivery and current engine speed is varied so does the measure of rotational motion (i.e. the engine speed for the cylinder varies). Changes that reduce the quality and quantity of combustion (e.g. retarded timing, reduced pressure, reduced quantity of fuel) reduce the measured relative engine speed value (engine speed of the cylinder at tooth 18 minus the value at TDC) compared to a mapped value. By contrast, changes that increase the quantity of combustion (such as a needle stuck open) increase the measured relative engine speed value relative to the mapped value.

As noted above, the traditional cylinder-to-cylinder diagnosis method is sensitive to relative changes in engine speed between cylinders but is less effective at determining which cylinder is affected. Conveniently, therefore the cylinder-to-cylinder methodology may be combined with the diagnosis method according to the present invention in order to provide a combined diagnosis technique that can detect the location and severity of a fault without misdiagnosis.

The cylinder-to-cylinder speed variation method may be used to highlight possible candidate cylinders for being at fault with a measure of severity (e.g. either cylinder 3 = needle stuck open or cylinder 4 = misfiring) and the method according to the present invention can determine which candidate cylinder is actually misfiring and which is simply seeing the knock on effect of another fault (e.g. cylinder 3 = high acceleration and cylinder 4 = healthy, therefore fault is at cylinder 3 and is of type Needle Stuck Open).

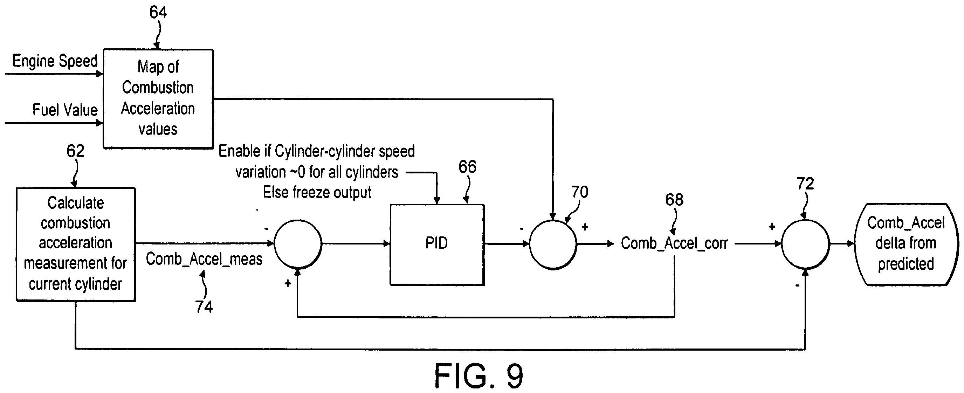

When there is no fault on any of the cylinders within the engine, the cylinder-to-cylinder test will return a speed variation of approximately zero across all cylinders (see graph 5 of Figure 4). It is noted that the identification of this state can be used to correct the mapped relative engine speed that is expected between the two measurement points at a given engine speed/fuel value stored in the function map. Recalibration of the map may be achieved by means of a feedback loop with PID control plus a feed forward term (from the function map) and this process is described in more detail with reference to Figure 9 below.

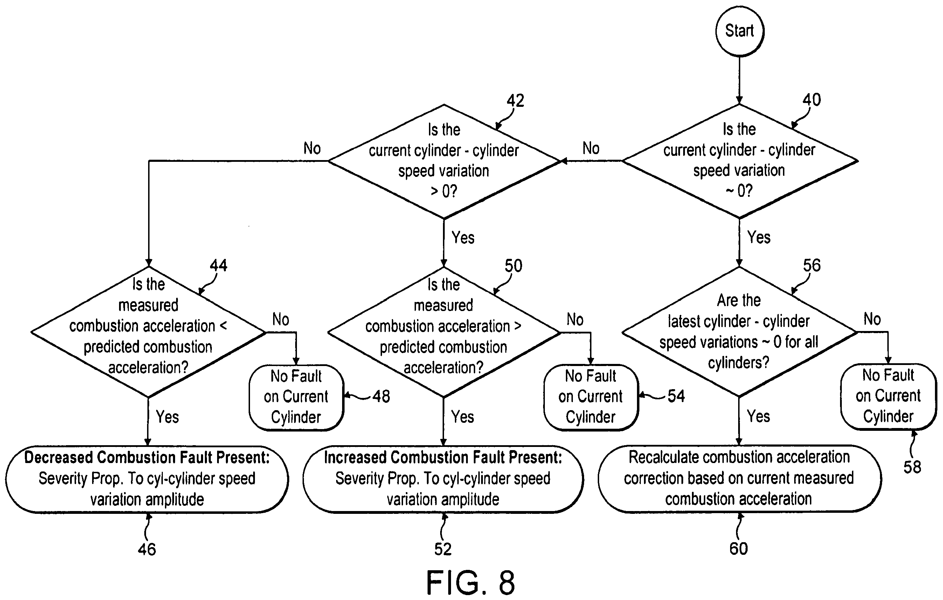

Figure 8 illustrates the combined diagnostic method in accordance with a further embodiment of the present invention.

After the test begins, the diagnostic control unit (which may be integrated within the vehicle's engine control unit (ECU) or within a separate unit) moves to Step 40 in which a cylinder-to-cylinder engine speed variation test is performed and the diagnostic control unit tests whether the speed variation across the current cylinder of the engine is approximately zero or not.

If the cylinder-to-cylinder speed variation is not zero then this indicates that there is potentially a fault within the current cylinder and the diagnostic control unit moves to Step 42.

In Step 42 the diagnostic control unit determines if the current cylinder-to-cylinder speed variation is greater than zero or not. If the speed variation is greater than zero this indicates that there may be a nozzle stuck open or that the cylinder is reacting to a misfire on one of the other cylinders.

If the speed variation (cylinder-to-cylinder) is not greater than zero then the diagnostic control unit moves to Step 44 and assesses the cylinder under test using the diagnostic method according to the first embodiment of the present invention.

It is noted that Figures 8 and 9 refer to "combustion acceleration". This term is used herein to indicate that the diagnostic test of the present invention is effectively assessing the increase/decrease to the rotational speed of the engine caused by combustion on the cylinder under test, i.e. an acceleration of the cylinder caused by combustion - combustion acceleration. What is in reality being measured (or stored and accessed from the function map) is the relative engine speed value derived from the engine speed at tooth 18 minus the engine speed at tooth 13.

In Step 44, the relative engine speed between two points of the combustion cycle for the cylinder under test are calculated. Preferably, this calculation is repeated over, for example, 100 cycles (as in Figure 7) and then the calculated value is compared to the expected relative engine speed according to the map for the current engine speed and fuel value.

If, in Step 44, the measured value is less than the predicted value then this indicates that there is some type of decreased combustion fault present on the cylinder under test. At step 46, the diagnostic unit uses the cylinder-to-cylinder diagnostic method once again to determine the severity of the fault, the severity being proportional to the cylinder-to-cylinder variation amplitude.

If, however, in Step 44, the measured value is greater than the predicted value then this indicates that there is no fault on the current cylinder. Any variations seen on the cylinder-to-cylinder test relating to this cylinder can in this instance be attributed to an instability variation within the fuel system rather than a fault. This option ends the diagnostic test at outcome 48.

Returning to Step 42, if the current cylinder-to-cylinder variation is greater than zero then this indicates that there may be a nozzle stuck open fault. To test this further the diagnostic control unit moves to Step 50 in which the unit again assesses the cylinder under test using the diagnostic method according to the first embodiment of the present invention and calculates the relative engine speed between two points of the combustion cycle for the cylinder under test. In Step 50, the diagnostic control unit determines whether the measured relative engine speed value is greater than the predicted relative engine speed value from the map.

If the measured value in Step 50 is greater than the predicted value this suggests that there is some type of increased combustion fault present on the cylinder under test. The diagnostic control unit can then move to Step 52 in which the cylinder-to-cylinder test can be used to determine the severity of the fault, the severity once again being proportional to the cylinder-to-cylinder variation amplitude.

If however the measured value is less than the predicted value then this indicates that there is no fault on the present cylinder and the diagnostic test ends at outcome 54.

Returning to Step 40, if the diagnostic control unit determines that the cylinder-to-cylinder speed variation on the current cylinder is approximately zero (i.e. if the current cylinder has the same rpm as the adjacent cylinder(s)) then the unit moves to Step 56 in which the unit determines if the engine speed is the same across all the cylinders. If the answer is no then the diagnostic test ends at outcome 58. If however the answer is yes (i.e. if the cylinder-to-cylinder speed variation resembles graph 5 of Figure 4), then the diagnostic unit can move to Step 60.

In Step 60, the diagnostic control unit can exploit the fact that the engine speed is the same across all the cylinders to calculate any corrections that are needed to the map of relative engine speed values. This recalculation process is described in more detail in relation to Figure 9.

Figure 9 shows the control logic that relates to the present invention and which also may be used to correct the predicted (i.e. map output value) for the relative engine speed value between the two measurement points on the test cylinder.

At point 62 the relative engine speed value for the current cylinder is calculated as described above in relation to Figures 6 and 7 (i.e. the real time speed at tooth 18 minus speed at tooth 13 value is calculated). At point 64 the predicted relative engine speed for the current engine operating conditions is read from the map.

A PID controller 66 comprises a correction factor (or a series of correction factors, e.g. one per cylinder) for the map based values. Correction may be needed due to engine wear and tear since the original map was created or for other reasons (e.g. a variation in fuel quality which would affect all cylinders equally). In the event that the cylinder-to-cylinder speed variation is not equal to zero then the last calculated correction value is returned from the PID and used to adjust the map based output at point 68 to output a corrected, predicted relative engine speed value 70. It is noted that it is this corrected relative engine speed value 70 that is used in Steps 44 and 50 of Figure 8.

At point 72 the predicted value for the relative engine speed (as corrected by the PID output) is compared to the measured relative engine speed value. If "measured" minus "predicted" returns a positive value then there is a needle stuck open fault. If "measured" minus "predicted" returns a negative value then there is a reduced combustion quantity type fault.

If the cylinder-to-cylinder speed variation is approximately zero across all cylinders then the engine is running without any faults. Under these conditions, the control logic in Figure 9 may be used to update the correction factor stored in the PID so that the predicted value as corrected by the correction factor is properly calibrated. During this recalibration phase, the PID controller 66 attempts to make the measured relative engine speed value 74 equal to the corrected value at point 68. This process alters the correction factor that is held within the PID.

It will be understood that the embodiments described above are given by way of example only and are not intended to limit the invention, the scope of which is defined in the appended claims. It will also be understood that the embodiments described may be used individually or in combination.

It is noted, for instance, that while the embodiments of the invention are described above (Figures 6-9) in relation to engine speed at two different points on the cylinder's combustion cycle, it would be possible to analyse cylinder movement in relation to another engine rotation parameter, such as crank tooth time.

It is also noted that while Figure 9 shows addition and subtraction functions the correction factor may comprise a multiplication function.

It is further noted that it is not necessary to combine the diagnosis method according to the present invention with the traditional cylinder-to-cylinder diagnosis method in order to determine the severity of a fault. As an alternative the combined relative engine speed plot of Figure 7 may be used to determine fault severity - cf. the various fault groups that are detailed to the right of the plot.

It is also noted that the term "crank teeth" is taken to cover both projections from the crank wheel as shown in Figure 1 or alternatively drilled holes in the crank wheel.

## Claims

1. A diagnostic unit for determining the operational status of a fuel delivery system of an engine, the engine comprising a plurality of cylinders, each one of the cylinders comprising a combustion chamber into which fuel is injected by an associated fuel injector and within which, in use, combustion events repeatedly occur to define a combustion cycle of the cylinder between successive combustion events, the diagnostic unit comprising:

   inputs for receiving data related to engine rotation
   processing means arranged: (i) to determine, from the data received at the inputs, a first engine rotation parameter for a cylinder under test at a first point within the combustion cycle of the cylinder and to determine a second engine rotation parameter for the cylinder under test at a second, different point within the combustion cycle of the cylinder; and (ii) to compare the two engine rotation parameters for the test cylinder in order to identify the operational status of the fuel delivery system associated with the cylinder under test
   wherein the processing means is arranged to derive a relative engine rotation parameter, the relative engine rotation parameter being the difference between the first and second engine rotation parameters, and to compare the relative engine rotation parameter to a predicted relative engine rotation parameter in order to determine the operational status of the cylinder under test wherein predicted relative engine rotation parameters are stored in a function map as a function of engine speed and injected fuel quantity.

2. A diagnostic unit as claimed in Claim 1, wherein the processing means is arranged to determine the two engine rotation parameters at two points towards the end of the combustion cycle of the cylinder under test.

3. A diagnostic unit as claimed in Claim 2, wherein the processing means is arranged to determine the first engine rotation parameter at the cylinder's top dead centre position and to determine the second engine rotation parameter at a point in the combustion cycle after the top dead centre position.

4. A diagnostic unit as claimed in any preceding claim wherein the engine rotation parameters are determined at the same combustion cycle positions for the cylinder under test over a plurality of combustion cycles.

5. A diagnostic unit as claimed in any preceding claim, further comprising output means for outputting an indication of the operational status of the engine

6. A diagnostic unit as claimed in Claim 5, wherein the output means outputs a notification signal indicating a severe combustion fault for the cylinder under test if the processing means determines that the relative engine rotation parameter is a negative value.

7. A diagnostic unit as claimed in any preceding claim, further comprising output means for outputting an indication of the operational status of the engine

8. A diagnostic unit as claimed in Claim 7, wherein the output means outputs an over-fuelling notification signal for the cylinder under test if the processing means determines that the predicted relative engine rotation parameter is less than the determined engine rotation parameter.

9. A diagnostic unit as claimed in Claim 8, wherein the output means outputs a needle stuck open notification signal for the cylinder under test.

10. A diagnostic unit as claimed in Claim 7, wherein the output means outputs a cylinder reduced combustion quantity/quality notification signal for the cylinder under test if the processing means determines that the predicted relative engine rotation parameter is greater than the determined engine rotation parameter.

11. A diagnostic unit as claimed in Claim 10, wherein the output means outputs a cylinder misfire notification signal for the cylinder under test if the processing means determines that the predicted relative engine rotation parameter is greater than the determined engine rotation parameter.

12. A diagnostic unit as claimed in any preceding claim, wherein the processing means is arranged to determine, from the data received at the inputs, engine speed variations between cylinders in order to identify cylinders within the engine that are potentially exhibiting a fault.

13. A diagnostic unit as claimed in any preceding claim, further comprising correction means arranged to correct engine rotation parameters stored in the function map.

14. A diagnostic unit as claimed in Claim 13 wherein:

the processing means is arranged to determine, from the data received at the inputs, when engine speed variations across all the cylinders is approximately zero and
the correction means is subsequently arranged to compare the determined relative engine rotation parameter with the corresponding relative engine rotation parameter stored in the function map and to apply a correction factor in the event of any discrepancy.

15. A diagnostic unit as claimed in either of Claims 13 or 14, wherein the correction means comprises a feedback loop with a PID controller and a feed forward term from the function map.

16. A diagnostic unit as claimed in any preceding claim, wherein the data relating to the engine rotation comprises data relating to the rotation of a crank wheel within the engine.

17. A diagnostic unit as claimed in Claim 16, wherein the processing means is arranged to determine the speed of the crank wheel for the cylinder under test at two different points within the combustion cycle of the cylinder.

18. A diagnostic unit as claimed in Claim 17, wherein the crank wheel comprises a group of regularly spaced crank teeth associated with each cylinder within the engine and the processing means is arranged to monitor the time taken for a given crank tooth to move past a crank tooth sensor and to subsequently determine the speed of the crank wheel.

19. A diagnostic unit as claimed in Claim 16, wherein the crank wheel comprises a group of regularly spaced crank teeth associated with each cylinder within the engine and the processing means is arranged to determine the time taken for two different crank teeth for the cylinder under test to move past a crank tooth sensor within the combustion cycle of the cylinder.

20. A diagnostic unit as claimed in Claim 19, wherein the processing means is arranged to determine the first engine rotation parameter at the cylinder's top dead centre position and to determine the second engine rotation parameter at a point in the combustion cycle corresponding to the final crank tooth associated with the cylinder under test.

21. A diagnostic system of a vehicle comprising a diagnostic unit according to any of Claims 1 to 20, a crank wheel, the crank wheel comprising a group of regularly spaced crank teeth associated with each cylinder within the engine, and a crank tooth sensor for sensing movement of the crank teeth, the output of the crank tooth sensor being input to the diagnostic unit.

22. An electronic control unit for a vehicle comprising a diagnostic unit according to any of Claims 1 to 20.

23. A method of determining the operational status of a fuel delivery system of an engine, the engine comprising a plurality of cylinders, each one of the cylinders comprising a combustion chamber into which fuel is injected by an associated fuel injector and within which, in use, combustion events repeatedly occur to define a combustion cycle of the cylinder between successive combustion events, the method comprising:

receiving data related to engine rotation
determining, from the data received, a first engine rotation parameter for a cylinder under test at a first point within the combustion cycle of the cylinder;
determining a second engine rotation parameter for the cylinder under test at a second, different point within the combustion cycle of the cylinder; and
comparing the two engine rotation parameters for the test cylinder in order to identify the operational status of the fuel delivery system associated with the cylinder under test
the method further comprising:

deriving a relative engine rotation parameter, the relative engine rotation parameter being the difference between the first and second engine rotation parameters; and
comparing the relative engine rotation parameter to a predicted relative engine rotation parameter in order to determine the operational status of the cylinder under test
wherein predicted relative engine rotation parameters are stored in a function map as a function of engine speed and injected fuel quantity.

24. A data carrier comprising a computer program arranged to configure a diagnostic unit or an engine control unit to implement the method according to Claim 23.

**Patentansprüche**

1. Eine Diagnoseeinheit zum Bestimmen des Betriebszustands eines Kraftstoffzufuhrsystems eines Motors, wobei der Motor eine Vielzahl von Zylindern aufweist, wobei jeder der Zylinder eine Verbrennungskammer aufweist, in die Kraftstoff durch eine assoziierte Kraftstoffeinspritzeinrichtung injiziert wird und in der, in Betrieb, Verbrennungsereignisse wiederholt stattfinden, um einen Verbrennungszyklus des Zylinders zwischen aufeinanderfolgenden Verbrennungsereignissen zu definieren, wobei die Diagnoseeinheit aufweist:

Eingänge zum Empfangen von Daten in Bezug auf eine Motordrehung;
Verarbeitungsmittel, die ausgebildet sind zum:
(i) Bestimmen, aus den an den Eingängen empfangenen Daten, eines ersten Motordrehparameters für einen Prüfzylinder an einem ersten Punkt innerhalb des Verbrennungszyklus des Zylinders und zum Bestimmen eines zweiten Motordrehparameters für den Prüfzylinder an einem zweiten unterschiedlichen Punkt innerhalb des Verbrennungszyklus des Zylinders; und (ii) Vergleichen der zwei Motordrehparameter für den Testzylinder, um den Betriebszustand des Kraftstoffzufuhrsystems, das mit dem Prüfzylinder assoziiert ist, zu identifizieren, wobei das Verarbeitungsmittel ausgebildet ist zum Ableiten eines relativen Motordrehparameters, wobei der relative Motordrehparameter die Differenz zwischen den ersten und zweiten Motordrehparametern ist, und zum Vergleichen des relativen Motordrehparameters mit einem vorausgesagten relativen Motordrehparameter, um den Betriebszustand des Prüfzylinders zu bestimmen, wobei vorausgesagte relative Motordrehparameter in einer Funktionskarte als eine Funktion von Motordrehzahl und injizierter Kraftstoffquantität gespeichert sind.

2. Eine Diagnoseeinheit gemäß Anspruch 1, wobei das Verarbeitungsmittel ausgebildet ist zum Bestimmen der zwei Motordrehparameter an zwei Punkten gegen Ende des Verbrennungszyklus des Prüfzylinders.

3. Eine Diagnoseeinheit gemäß Anspruch 2, wobei das Verarbeitungsmittel ausgebildet ist zum Bestimmen des ersten Motordrehparameters an der oberen Totpunktposition des Zylinders und zum Bestimmen des zweiten Motordrehparameters an einem Punkt in dem Verbrennungszyklus nach der oberen Totpunktposition.

4. Eine Diagnoseeinheit gemäß einem vorhergehenden Anspruch, wobei die Motordrehparameter an denselben Verbrennungszykluspositionen für den Prüfzylinder über eine Vielzahl von Verbrennungszyklen bestimmt werden.

5. Eine Diagnoseeinheit gemäß einem vorhergehenden Anspruch, die weiter Ausgabemittel aufweist zum Ausgeben einer Angabe des Betriebszustands des Motors.

6. Eine Diagnoseeinheit gemäß Anspruch 5, wobei das Ausgabemittel ein Benachrichtigungssignal ausgibt, das einen schweren Verbrennungsfehler für den Prüfzylinder angibt, wenn das Verarbeitungsmittel bestimmt, dass der relative Motordrehparameter ein negativer Wert ist.

7. Eine Diagnoseeinheit gemäß einem vorhergehenden Anspruch, die weiter Ausgabemittel aufweist zum Ausgeben einer Angabe des Betriebszustands des Motors.

8. Eine Diagnoseeinheit gemäß Anspruch 7, wobei das Ausgabemittel ein Kraftstoffüberversorgungs-Benachrichtigungssignal für den Prüfzylinder ausgibt, wenn das Verarbeitungsmittel bestimmt, dass der vorausgesagte relative Motordrehparameter geringer ist als der bestimmte Motordrehparameter.

9. Eine Diagnoseeinheit gemäß Anspruch 8, wobei das Ausgabemittel ein "Nadel offen hängengeblieben"-Benachrichtigungssignal für den Prüfzylinder ausgibt.

10. Eine Diagnoseeinheit gemäß Anspruch 7, wobei das Ausgabemittel ein "Zylinder reduzierte Verbrennungsquantität/qualität"-Benachrichtigungssignal für den Prüfzylinder ausgibt, wenn das Verarbeitungsmittel bestimmt, dass der vorausgesagte relative Motordrehparameter größer ist als der bestimmte Motordrehparameter.

11. Eine Diagnoseeinheit gemäß Anspruch 10, wobei das Ausgabemittel ein "Zylinder-Fehlzündung"-Benachrichtigungssignal für den Prüfzylinder ausgibt, wenn das Verarbeitungsmittel bestimmt, dass der vorausgesagte relative Motordrehparameter größer ist als der bestimmte Motordrehparameter.

12. Eine Diagnoseeinheit gemäß einem vorhergehenden Anspruch, wobei das Verarbeitungsmittel ausgebildet ist zum Bestimmen, aus den an den Eingängen empfangenen Daten, von Motordrehzahlvariationen zwischen Zylindern, um Zylinder innerhalb des Motors zu identifizieren, die möglicherweise einen Fehler zeigen.

13. Eine Diagnoseeinheit gemäß einem vorhergehenden Anspruch, die weiter ein Korrekturmittel aufweist, das ausgebildet ist zum Korrigieren von in der Funktionskarte gespeicherten Motordrehparametern.

**14.** Eine Diagnoseeinheit gemäß Anspruch 13, wobei:

das Verarbeitungsmittel ausgebildet ist zum Bestimmen, aus den an den Eingängen empfangenen Daten, wenn Motordrehzahlvariationen über allen Zylindern annähernd Null ist, und das Korrekturmittel anschließend ausgebildet ist zum Vergleichen des bestimmten relativen Motordrehparameters mit dem entsprechenden relativen Motordrehparameter, der in der Funktionskarte gespeichert ist, und zum Anwenden eines Korrekturfaktors für den Fall einer Diskrepanz.

**15.** Eine Diagnoseeinheit gemäß einem der Ansprüche 13 oder 14, wobei das Korrekturmittel eine Rückkopplungsschleife mit einer PID-Steuervorrichtung und einen Vorwärtsregelungsterm von der Funktionskarte aufweist.

**16.** Eine Diagnoseeinheit gemäß einem vorhergehenden Anspruch, wobei die Daten in Bezug auf die Motordrehung Daten aufweisen in Bezug auf die Drehung einer Kurbelwelle innerhalb des Motors.

**17.** Eine Diagnoseeinheit gemäß Anspruch 16, wobei das Verarbeitungsmittel ausgebildet ist zum Bestimmen der Geschwindigkeit der Kurbelwelle für den Prüfzylinder an zwei verschiedenen Punkten innerhalb des Verbrennungszyklus des Zylinders.

**18.** Eine Diagnoseeinheit gemäß Anspruch 17, wobei die Kurbelwelle eine Gruppe von regelmäßig beabstandeten Kurbelzähnen aufweist, assoziiert mit jedem Zylinder in dem Motor, und das Verarbeitungsmittel ausgebildet ist zum Überwachen der Zeit für einen gegebenen Kurbelzahn, um sich vorbei an einem Kurbelzahnsensor zu bewegen, und zum anschließenden Bestimmen der Drehzahl der Kurbelwelle.

**19.** Eine Diagnoseeinheit gemäß Anspruch 16, wobei die Kurbelwelle eine Gruppe von regelmäßig beabstandeten Kurbelzähnen aufweist, assoziiert mit jedem Zylinder in dem Motor, und das Verarbeitungsmittel ausgebildet ist zum Bestimmen der Zeit für zwei verschiedene Kurbelzähne für den Prüfzylinder, um sich vorbei an einem Kurbelzahnsensor zu bewegen, innerhalb des Verbrennungszyklus des Zylinders.

**20.** Eine Diagnoseeinheit gemäß Anspruch 19, wobei das Verarbeitungsmittel ausgebildet ist zum Bestimmen des ersten Motordrehparameters an der oberen Totpunktposition des Zylinders und zum Bestimmen des zweiten Motordrehparameters an einem Punkt in dem Verbrennungszyklus entsprechend des letzten Kurbelzahns, der mit dem Prüfzylinder assoziiert ist.

**21.** Ein Diagnosesystem eines Fahrzeugs, das aufweist eine Diagnoseeinheit gemäß einem der Ansprüche 1 bis 20, eine Kurbelwelle, wobei die Kurbelwelle eine Gruppe von regelmäßig beabstandeten Kurbelzähnen aufweist, assoziiert mit jedem Zylinder in dem Motor, und einen Kurbelzahnsensor zum Erfassen einer Bewegung der Kurbelzähne, wobei die Ausgabe des Kurbelzahnsensors in die Diagnoseeinheit eingegeben wird.

**22.** Eine elektronische Steuereinheit für ein Fahrzeug mit einer Diagnoseeinheit gemäß einem der Ansprüche 1 bis 20.

**23.** Ein Verfahren zum Bestimmen des Betriebszustands eines Kraftstoffzufuhrsystems eines Motors, wobei der Motor eine Vielzahl von Zylindern aufweist, wobei jeder der Zylinder eine Verbrennungskammer aufweist, in die Kraftstoff durch eine assoziierte Kraftstoffeinspritzeinrichtung injiziert wird und in der, in Betrieb, Verbrennungsereignisse wiederholt stattfinden, um einen Verbrennungszyklus des Zylinders zwischen aufeinanderfolgenden Verbrennungsereignissen zu definieren, wobei das Verfahren aufweist:

Empfangen von Daten in Bezug auf eine Motordrehung;
Bestimmen, aus den empfangenen Daten, eines ersten Motordrehparameters für einen Prüfzylinder an einem ersten Punkt innerhalb des Verbrennungszyklus des Zylinders;
Bestimmen eines zweiten Motordrehparameters für den Prüfzylinder an einem zweiten unterschiedlichen Punkt innerhalb des Verbrennungszyklus des Zylinders; und
Vergleichen der zwei Motordrehparameter für den Testzylinder, um den Betriebszustand des Kraftstoffzufuhrsystems, das mit dem Prüfzylinder assoziiert ist, zu identifizieren, wobei das Verfahren weiter aufweist:

Ableiten eines relativen Motordrehparameters, wobei der relative Motordrehparameter die Differenz zwischen den ersten und zweiten Motordrehparametern ist; und
Vergleichen des relativen Motordrehparameters mit einem vorausgesagten relativen Motordrehparameter, um den Betriebszustand des Prüfzylinders zu bestimmen, wobei vorausgesagte relative Motordrehparameter in einer Funktionskarte als eine Funktion von Motordrehzahl und injizierter Kraftstoffquantität gespeichert sind.

**24.** Ein Datenträger mit einem Computerprogramm, das ausgebildet ist zum Konfigurieren einer Diagnoseeinheit oder einer Motorsteuereinheit, um das Verfahren gemäß Anspruch 23 zu implementieren.

## Revendications

1. Unité de diagnostic pour déterminer l'état opérationnel d'un système de distribution de carburant d'un moteur, le moteur comprenant une pluralité de cylindres, chacun des cylindres comprenant une chambre de combustion dans laquelle du carburant est injecté par un injecteur de carburant associé et dans laquelle, en utilisation, des événements de combustion se produisent façon répétée pour définir un cycle de combustion du cylindre entre des événements de combustion successifs, l'unité de diagnostic comprenant :

   des entrées pour recevoir des données en relation avec la rotation du moteur
   un moyen de traitement agencé : (i) pour déterminer, à partir des données reçues aux entrées, un premier paramètre de rotation moteur pour un cylindre soumis à un test à un premier point à l'intérieur du cycle de combustion du cylindre et pour déterminer un second paramètre de rotation du moteur pour le cylindre soumis à un test à un second point différent à l'intérieur du cycle de combustion du cylindre ; et (ii) pour comparer les deux paramètres de rotation du moteur pour le cylindre soumis à un test afin d'identifier l'état opérationnel du système de distribution de carburant associé avec le cylindre soumis à un test
   dans laquelle le moyen de traitement est agencé pour dériver un paramètre de rotation relatif du moteur, le paramètre de rotation relatif du moteur étant la différence entre le premier et le second paramètre de rotation du moteur, et pour comparer le paramètre de rotation relatif du moteur à un paramètre de rotation relatif prédit du moteur afin de déterminer l'état opérationnel du cylindre soumis à un test
   dans lequel des paramètres de rotation relatifs prédits du moteur sont stockés dans une carte de fonction en tant que fonction de la vitesse du moteur et de la quantité de carburant injecté.

2. Unité de diagnostic selon la revendication 1, dans laquelle le moyen de traitement est agencé pour déterminer les deux paramètres de rotation du moteur à deux points vers la fin du cycle de combustion du cylindre soumis à un test.

3. Unité de diagnostic selon la revendication 2, dans laquelle le moyen de traitement est agencé pour déterminer le premier paramètre de rotation du moteur à la position du point mort haut du cylindre et pour déterminer le second paramètre de rotation du moteur à un point dans le cycle de combustion après la position du point mort haut.

4. Unité de diagnostic selon l'une quelconque des revendications précédentes, dans laquelle les paramètres de rotation du moteur sont déterminés aux mêmes positions du cycle de combustion pour le cylindre soumis à un test sur une pluralité de cycles de combustion.

5. Unité de diagnostic selon l'une quelconque des revendications précédentes, comprenant en outre un moyen de sortie pour sortir une indication de l'état opérationnel du moteur.

6. Unité de diagnostic selon la revendication 5, dans laquelle le moyen de sortie sort un signal de notification indiquant un important défaut de combustion pour le cylindre soumis à un test si le moyen de traitement détermine que le paramètre de rotation relatif du moteur est une valeur négative.

7. Unité de diagnostic selon l'une quelconque des revendications précédentes, comprenant en outre un moyen de sortie pour sortir une indication de l'état opérationnel du moteur.

8. Unité de diagnostic selon la revendication 7, dans laquelle le moyen de sortie sort un signal de notification de suralimentation en carburant pour le cylindre soumis à un test si le moyen de traitement détermine que le paramètre de rotation relatif prédit du moteur est inférieur au paramètre de rotation déterminé du moteur.

9. Unité de diagnostic selon la revendication 8, dans laquelle le moyen de sortie sort un signal de notification de pointeau coincé en position ouverte pour le cylindre soumis à un test.

10. Unité de diagnostic selon la revendication 7, dans laquelle le moyen de sortie sort un signal de notification de quantité/qualité de combustion réduite en cylindre pour le cylindre soumis à un test si le moyen de traitement détermine que le paramètre de rotation relatif prédit du moteur est plus élevé que le paramètre de rotation déterminé du moteur.

11. Unité de diagnostic selon la revendication 10, dans laquelle le moyen de sortie sort un signal de notification de défaut d'allumage en cylindre pour le cylindre soumis à un test si le moyen de traitement détermine que le paramètre de rotation relatif prédit du moteur est plus grand que le paramètre de rotation déterminé du moteur.

**12.** Unité de diagnostic selon l'une quelconque des revendications précédentes, dans laquelle le moyen de traitement est agencé pour déterminer, à partir des données reçues aux entrées, des variations de vitesse du moteur entre cylindres afin d'identifier des cylindres dans le moteur qui présentent potentiellement un défaut.

**13.** Unité de diagnostic selon l'une quelconque des revendications précédentes, comprenant en outre un moyen de correction agencé pour corriger des paramètres de rotation du moteur stockés dans la carte de fonction.

**14.** Unité de diagnostic selon la revendication 13, dans laquelle :

le moyen de traitement est agencé pour déterminer, à partir des données reçues aux entrées, quand des variations de vitesse du moteur à travers tous les cylindres sont approximativement égales à zéro et

le moyen de correction est ultérieurement agencé pour comparer le paramètre de rotation relatif déterminé du moteur avec le paramètre de rotation relatif correspondant du moteur stocké dans la carte de fonction et pour appliquer un facteur de correction dans le cas d'une quelconque divergence.

**15.** Unité de diagnostic selon l'une ou l'autre des revendications 13 ou 14, dans laquelle le moyen de correction comprend une boucle de rétroaction avec un contrôleur PID et un terme de précompensation depuis la carte de fonction.

**16.** Unité de diagnostic selon l'une quelconque des revendications précédentes, dans laquelle les données en relation avec la rotation du moteur comprennent des données en relation avec la rotation d'un volant de vilebrequin à l'intérieur du moteur.

**17.** Unité de diagnostic selon la revendication 16, dans laquelle le moyen de traitement est agencé pour déterminer la vitesse du volant de vilebrequin pour le cylindre soumis à un test à deux différents points à l'intérieur du cycle de combustion du cylindre.

**18.** Unité de diagnostic selon la revendication 17, dans laquelle le volant de vilebrequin comprend un groupe de dents de vilebrequin régulièrement espacées associées à chaque cylindre dans le moteur, et le moyen de traitement est agencé pour surveiller le temps pris pour qu'une dent de vilebrequin donnée se déplace en passant devant un capteur de dents de vilebrequin et pour déterminer ultérieurement la vitesse du volant de vilebrequin.

**19.** Unité de diagnostic selon la revendication 16, dans laquelle le volant de vilebrequin comprend un groupe de dents de vilebrequin régulièrement espacées associées à chaque cylindre dans le moteur, et le moyen de traitement est agencé pour déterminer le temps pris pour que deux dents de vilebrequin différentes pour le cylindre soumis à un test se déplacent en passant devant un capteur de dents de vilebrequin à l'intérieur du cycle de combustion du cylindre.

**20.** Unité de diagnostic selon la revendication 19, dans laquelle le moyen de traitement est agencé pour déterminer le premier paramètre de rotation du moteur à la position du point mort haut du cylindre et pour déterminer le second paramètre de rotation du moteur à un point dans le cycle de combustion correspondant à la dent de vilebrequin finale associée avec le cylindre soumis à un test.

**21.** Système de diagnostic d'un véhicule comprenant une unité de diagnostic selon l'une quelconque des revendications 1 à 20, un volant de vilebrequin, le volant de vilebrequin comprenant un groupe de dents de vilebrequin régulièrement espacées associées à chaque cylindre à l'intérieur du moteur, et un capteur de dents de vilebrequin pour détecter le mouvement des dents de vilebrequin, la sortie du capteur de dents de vilebrequin étant injectée dans l'unité de diagnostic.

**22.** Unité de commande électronique pour un véhicule comprenant une unité de diagnostic selon l'une quelconque des revendications 1 à 20.

**23.** Procédé pour déterminer l'état opérationnel d'un système de distribution de carburant d'un moteur, le moteur comprenant une pluralité de cylindres, chacun des cylindres comprenant une chambre de combustion dans laquelle du carburant est injecté par un injecteur de carburant associé et dans laquelle, en utilisation, des événements de combustion se produisent de façon répétée pour définir un cycle de combustion du cylindre entre des événements de combustion successifs, le procédé comprenant les étapes consistant à :

recevoir des données en relation avec la rotation du moteur

déterminer, à partir des données reçues, un premier paramètre de rotation du moteur pour un cylindre soumis à un test à un premier point dans le cycle de combustion du cylindre ;

déterminer un second paramètre de rotation du moteur pour le cylindre soumis à un test à un second point différent dans le cycle de combustion du cylindre ; et

comparer les deux paramètres de rotation du moteur pour le cylindre soumis à un test afin d'identifier l'état opérationnel du système de distribution de carburant associé avec le cylindre soumis à un test

le procédé comprenant en outre l'étape consistant à :

dériver un paramètre de rotation relatif du moteur, le paramètre de rotation relatif du moteur étant la différence entre le premier et le second paramètre de rotation du moteur ; et

comparer le paramètre de rotation relatif du moteur à un paramètre de rotation relatif prédit du moteur afin de déterminer l'état opérationnel du cylindre soumis à un test dans lequel les paramètres de rotation relatifs prédits du moteur sont stockés dans une carte de fonction en tant que fonction de la vitesse du moteur et de la quantité de carburant injecté.

**24.** Support de données comprenant un programme d'ordinateur agencé pour configurer une unité de diagnostic ou une unité de commande moteur pour mettre en oeuvre le procédé selon la revendication 23.

FIG. 1

FIG. 2

FIG. 3

FIG. 4

Faulty cylinder (cylinder 2)

FIG. 5

EP 1 972 769 B1

Statistics (3*std) from 963 injections - faulty injector

FIG. 6

FIG. 7

```
                                                              Start

                                                                |
                                                                v
                              42                                        40
                    No   Is the              No    Is the
              +----------current cylinder - cylinder +----------current cylinder - cylinder
              |          speed variation                      speed variation
              |          > 0?                                 ~ 0?
              |              |                                     |
              |             Yes                                   Yes
              v              v                                     v
        44                          50                      56
    Is the                    Is the                   Are the
    measured         No       measured         No      latest cylinder - cylinder   No
    combustion acceleration <  +--  combustion acceleration >  +--  speed variations ~ 0 for all  +--
    predicted combustion       |   predicted combustion        |   cylinders?                     |
    acceleration?              |   acceleration?               |                                  |
        |                      v       |                       v       |                          v
       Yes                No Fault    Yes                   No Fault   Yes                      No Fault
        |                 on Current   |                    on Current  |                       on Current
        |                 Cylinder     |                    Cylinder    |                       Cylinder
        v                   48         v                      54        v                         58
  Decreased Combustion Fault    Increased Combustion Fault    Recalculate combustion acceleration
  Present:                      Present:                       correction based on current measured
  Severity Prop. To cyl-cylinder speed  Severity Prop. To cyl-cylinder speed  combustion acceleration
  variation amplitude            variation amplitude
        46                           52                             60
```

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19626690 A1